# EUROPÄISCHE PATENTSCHRIFT

(11) **EP 1 695 783 B1**
(45) Veröffentlichungstag und Bekanntmachung des Hinweises auf die Patenterteilung: **16.04.2008**
(21) Anmeldenummer: 05004365.2
(22) Anmeldetag: 28.02.2005
(51) Int. Cl.: B23H 9/16, B23H 7/26, B23H 3/00, B23H 3/02

(54) **Verfahren zum Ermitteln der Lage eines elektrochemisch gebohrten Kanals**
Method for determining the position of an electrochemically drilled passage hole.
Méthode pour déterminer la position d'un trou de passage usiné par électrochimie.

(43) Veröffentlichungstag der Anmeldung: 30.08.2006
(73) Patentinhaber: SIEMENS AKTIENGESELLSCHAFT, 80333 München (DE)
(72) Erfinder: Jabado, Rene, 14199 Berlin (DE); Krüger, Ursus, Dr., 14089 Berlin (DE); Körtvelyessy, Daniel, 13469 Berlin (DE); Reiche, Ralph, 13465 Berlin (DE); Rindler, Michael, 15566 Schöneiche (DE)

(56) Entgegenhaltungen:
- US-A- 4 043 883

## Beschreibung

Die vorliegende Erfindung betrifft ein Verfahren zum Ermitteln der Lage eines elektrochemisch gebohrten Kanals bei einem Werkstück sowie ein Verfahren zum Überwachen eines elektrochemischen Bohrprozesses.

Das Dokument US-A4043883, welches als nachliegender Stand der Technik anzusehen ist, zeigt ein derartiges Verfahren.

Elektrochemische Bohrprozesse finden in großer Zahl zum Bohren von Löchern und Kanälen mit kleinen Durchmessern in Metall Verwendung. Derartige Kanäle sind mechanisch schwierig zu bohren. Beim elektrochemischen Bohren wird von einer Düse ein Elektrolyt in das Bohrloch abgegeben, welcher die Düse mit dem Material des Werkstückes elektrisch leitend verbindet. Ein durch den Elektrolyten fließender elektrischer Strom führt zu einem Abtragen von Material am Werkstück, welches durch den strömenden Elektrolyten abtransportiert wird. Beim elektrochemischen Bohren stellt die Düse in der Regel die Kathode und das Werkstück die Anode dar.

In der Herstellung von Gasturbinenbauteilen kommen elektrochemische Bohrprozesse beispielsweise zum Bohren von Kühlluftbohrungen, etwa in Turbinenschaufeln, zur Anwendung. Das Bohren der Kühlluftbohrungen ist schon in der Neufertigung ein sehr kritischer Prozess, der zu ungewöhnlich hohen Ausschussraten führt. Insbesondere das Bohren von Kühlluftkanälen in Turbinenschaufeln längs der Schaufelachse ist schwierig. Trifft man beim Bohrprozess auf eine Inhomogenität des Grundmaterials, beispielsweise ein Korn mit abweichender Materialzusammensetzung, so kann dieses Korn zu einem Abweichen der Düse vom vorgegebenen Weg durch das Material führen. Bei dieser Abweichung kann die Düse unter Umständen unzulässig nahe an die Außenkontur des Bauteils gelangen.

Bislang ist kein Verfahren bekannt, mit dem während des elektrochemischen Bohrprozesses die Lage des gebohrten Kanals im Werkstück oder die zwischen dem Kanal und der Oberfläche des Werkstücks vorhandene Wanddicke zu bestimmen ist.

Es ist daher eine Aufgabe der vorliegenden Erfindung, ein Verfahren zur Verfügung zu stellen, welches das Ermitteln der Lage des gebohrten Kanals in einem Werkstück und/oder der zwischen dem Kanal und der Oberfläche des Werkstücks vorhandenen Wanddicke bereits während des Bohrvorgangs erlaubt. Es ist eine weitere Aufgabe der vorliegenden Erfindung, ein Verfahren zum Überwachen eines elektrochemischen Bohrprozesses zur Verfügung zu stellen, mit dem noch während des Bohrens auf Abweichungen des gebohrten Kanals von einer idealen Bohrlinie oder auf Abweichungen der Wanddicke zwischen dem Kanal und der Oberfläche des Werkstücks von einer vorgegebenen Wanddicke reagiert werden kann.

Die erste Aufgabe wird durch ein Verfahren nach Anspruch 1 zum Ermitteln der Lage eines mittels eines Elektrolyten elektrochemisch gebohrten Kanals in einem Werkstück und/oder der zwischen einem elektrochemisch gebohrten Kanal und der Oberfläche des Werkstückes vorhandenen Wanddicke und die zweite Aufgabe durch ein Verfahren nach Anspruch 4 zum Überwachen eines elektrochemischen Bohrprozesses gelöst.

Im erfindungsgemäßen Verfahren zum Ermitteln der Lage eines mittels eines Elektrolyten elektrochemisch gebohrten Kanals in einem Werkstück und/oder der zwischen einem elektrochemisch gebohrten Kanal und der Oberfläche des Werkstückes vorhandenen Wanddicke werden dem beim Bohren Verwendung findenden Elektrolyten magnetische Partikel zugesetzt. Die mit den magnetischen Partikeln verbundenen Magnetfelder werden detektiert, und aus den detektierten Magnetfeldern wird die Lage des elektrochemisch gebohrten Kanals und/oder die zwischen einem elektrochemisch gebohrten Kanal und der Oberfläche des Werkstückes vorhandene Wanddicke ermittelt. Das Erfassen der Wanddicke bietet dabei den Vorteil, dass lediglich eine eindimensionale Größe zu erfassen ist.

Da das Detektieren der Magnetfelder bereits während des Bohrprozesses erfolgen kann, ermöglicht das erfindungsgemäße Verfahren, die Lage des gebohrten Kanals und/oder die zwischen einem elektrochemisch gebohrten Kanal und der Oberfläche des Werkstückes vorhandene Wanddicke bereits während des Bohrprozesses zu ermitteln. Insbesondere kann die Lage des Kanals oder die Wanddicke im Bereich der Düse zum Zuführen der magnetischen Partikel ermittelt werden. Auf die Wanddicke kann entweder direkt aus den detektierten Magnetfeldern oder aus der Lage des Kanals in Verbindung mit der bekannten Lage der Oberfläche des Werkstückes geschlossen werden.

Zum Detektieren der Magnetfelder kann insbesondere ein supraleitender Quanteninterferenzdetektor, ein so genannter SQUID, zur Anwendung kommen. Die hohe Empfindlichkeit solcher SQUIDs führt zu einer guten Auflösung bei der Lagebestimmung der magnetischen Partikel und damit bei der Lagebestimmung des gebohrten Kanals. Eine Lagebestimmung mit einer lateralen Auflösung von 0,1 mm und besser ist so möglich.

Das Ermitteln der Lage des elektrochemisch gebohrten Kanals kann insbesondere mit Hilfe eines SQUID-Mikroskops erfolgen, in dem der supraleitende Quanteninterferenzdetektor zum Detektieren der Magnetfelder Verwendung findet.

Im erfindungsgemäßen Verfahren zum Überwachen eines elektrochemischen Bohrprozesses kommt das erfindungsgemäße Verfahren zum Ermitteln der Lage eines mittels eines Elektrolyten elektrochemisch gebohrten Kanals in einem Werkstück und/oder der zwischen dem elektrochemisch gebohrten Kanal und der Oberfläche des Werkstücks vorhandenen Wanddicke zur Anwendung. Hierdurch wird eine Online-Verfolgung der Position des elektrochemischen Bohrers, d.h. der Düse des Bohrers, und/oder der Wanddicke zwischen dem Bohrer und Oberfläche des Werkstückes während des Bohrprozesses möglich. Abweichungen von einer vorgegebenen Bohrlinie oder das Unterschreiten einer vorgegebenen Wanddicke können so bspw. anhand eines Vergleiches der ermittelten Bohrlinie mit der vorgegebenen Bohrlinie oder der ermittelten Wanddicke mit der vorgegebenen Wanddicke schon während des Bohrvorgangs detektiert werden.

Falls ein Abweichen des gebohrten Kanals von der vorgegebenen Bohrlinie detektiert wird, die eine vorgegebene zulässige Abweichung überschreitet, oder ein Unterschreiten der vorgegebenen Wanddicke detektieret wird, so kann in einer Weiterbildung des Überwachungsverfahrens ein Abbruch des elektrochemischen Bohrens erfolgen. Es wird dann keine unnötige Bearbeitungszeit mehr in ein Werkstück investiert, das anschließend Ausschuss ist.

Alternativ ist es auch möglich, das Werkstück beim Bohren unter mechanischer Spannung zu halten und die mechanische Spannung zu ändern, wenn beim Vergleichen der ermittelten Lage des gebohrten Kanals mit der vorgegebenen Bohrlinie ein Überschreiten einer vorgegebenen zulässigen Abweichung festgestellt wird oder wenn beim Vergleichen der ermittelten Wanddicke mit der vorgegebenen Wanddicke das Unterschreiten einer vorgegebenen Wanddicke festgestellt wird. Durch das Ändern der Spannung lässt sich die Richtung des Fortschreitens des Bohrprozesses beeinflussen und so beispielsweise das Unterschreiten eines minimalen Abstands des gebohrten Kanals von der Bauteiloberfläche vermeiden. Die zulässige Abweichung der Lage des gebohrten Kanals von der idealen Bohrlinie sollte hierbei so klein gewählt werden, dass die Abweichung noch nicht dazu führt, dass das Werkstück als Ausschuss zu betrachten ist. Zum Ändern der mechanischen Spannung kann der Bohrvorgang gegebenenfalls unterbrochen werden.

Als eine weitere Alternative ist es möglich, die Lage des elektrochemisch gebohrten Kanals im Werkstück oder die zwischen dem elektrochemisch gebohrten Kanal und der Oberfläche des Werkstücks vorhandene Wanddicke kontinuierlich zu erfassen und einer Regeleinheit zuzuführen, welche auf der Basis des Vergleiches der erfassten Lage des elektrochemisch gebohrten Kanals im Werkstück mit der vorgegebenen Bohrlinie bzw. des Vergleiches der erfassten Wanddicke mit der vorgegebenen Wanddicke eine Stellgröße zum Beeinflussen der mechanischen Spannung ausgibt.

Weitere Merkmale, Eigenschaften und Vorteile der vorliegenden Erfindung ergeben sich aus der nachfolgenden Beschreibung eines Ausführungsbeispiels unter Bezugnahme auf die beiliegende Figuren.
- Figur 1: zeigt in einer stark schematischen Darstellung die Durchführung des erfindungsgemäßen Verfahrens zum Ermitteln der Lage eines mittels eines Elektrolyten elektrochemisch gebohrten Kanals in einem Werkstück.
- Fig. 2: zeigt beispielhaft eine Gasturbine in einem Längsteilschnitt.
- Fig. 3: zeigt in perspektivischer Ansicht eine Laufschaufel oder Leitschaufel einer Strömungsmaschine.
- Fig. 4: zeigt eine Brennkammer einer Gasturbine

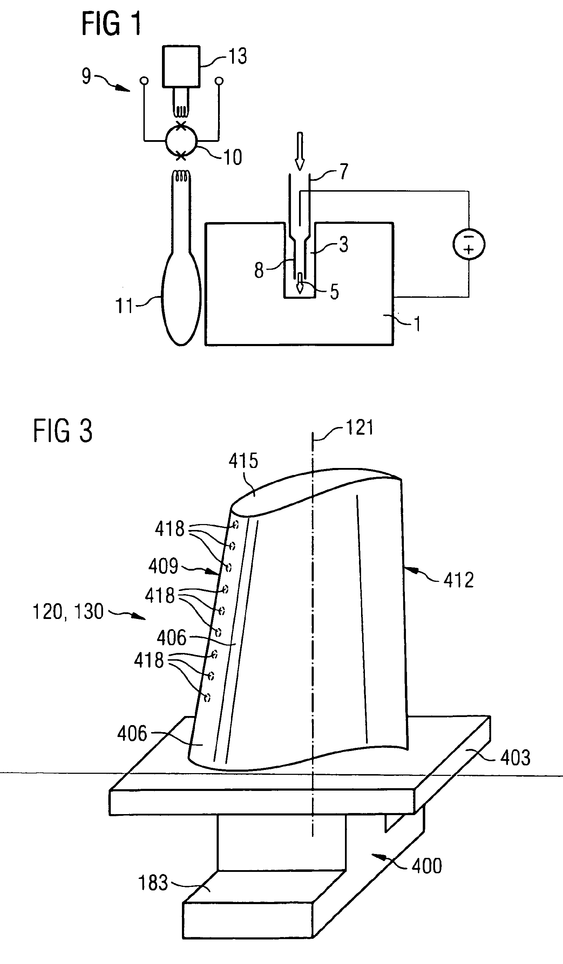

Figur 1 zeigt ein Werkstück 1, in welches elektrochemisch ein Kanal 3 gebohrt wird. Das Bohren erfolgt mittels eines Elektrolyten 5, der aus einer an der Spitze eines Bohrwerkzeuges 7 angeordneten Düse 8 in den Kanal 3 austritt. Der eigentliche Bohrvorgang erfolgt durch Oxidation des Materials des Werkstückes 1 mit Hilfe des Elektrolyten 5. Die Zufuhr des Elektrolyten 5 erfolgt aus einem in Figur 1 nicht dargestellten Reservoir.

Damit eine Oxidation des metallischen Basismaterials des Werkstückes 1 erfolgt, wird an das Bohrwerkzeug 7, insbesondere an die Düse 8, eine negative Spannung angelegt, sodass die Düse 8 als Kathode wirkt. An das Werkstück 1 wird dagegen eine positive Spannung angelegt, sodass es als Anode wirkt. Bei anliegender Spannung löst der Elektrolyt 5 das metallische Material des Werkstückes 1 durch Oxidation auf. Das aufgelöste Material kann dann zusammen mit dem Elektrolyten aus dem Bohrkanal entfernt werden. In der Regel wird der Elektrolyt mit dem aufgelösten Basismaterial von durch die Düse nachströmendem Elektrolyten aus dem Bohrkanal 3 ausgespült. Während des Bohrprozesses wird die Düse 8 kontinuierlich im Bohrkanal nachgeführt.

Im erfindungsgemäßen Verfahren sind dem Elektrolyten magnetische Partikel beigemischt. Die Magnetfelder dieser Partikel können mittels geeigneter Detektoren detektiert werden. Aus den von dem Detektor detektierten Signalen kann dann die Position der magnetischen Partikel und damit der Verlauf des Bohrkanals ermittelt werden.

Ebenso können magnetisierbare Partikel zugesetzt werden, die vorher magnetisiert werden, beispielsweise durch die Aufnahmespule 11. Weiterhin kann ein äußeres Magnetfeld angelegt werden, wobei die Partikel das Magnetfeld beeinflussen, sodass eine Rückkopplung entsteht, aus der sich die gewünschten Daten ermitteln lassen (Wirbelstromprüfung).

Im vorliegenden Ausführungsbeispiel findet zum Detektieren der Magnetfelder ein SQUID 10 Verwendung, der Teil eines in der Figur nur teilweise schematischen dargestellten SQUID-Mikroskopes 9 ist. Ein SQUID ist ein hoch sensitiver Detektor für Magnetfelder. Er umfasst im Wesentlichen eine supraleitende Schleife, die durch wenigstens ein so genanntes Josephsonelement unterbrochen ist. Derartige Josephsonelemente sind in der Regel entweder Einschnürungen der supraleitenden Schleife oder dünne Isolatoren, die benachbarte Bereiche der supraleitenden Schleife voneinander trennen. Die Josephsonelemente sind im Schaltsymbol für den SQUID 10 durch Kreuze und die supraleitende Schleife durch einen Kreis angedeutet.
Zum Detektieren der Magnetfelder kann der SQUID 10 mit einer Gleichspannung vorgespannt werden.

In einem SQUID-Mikroskop 9 wird das zu detektierende Magnetfeld in der Regel mit Hilfe einer Aufnahmespule 11 aufgenommen, die induktiv an den SQUID 10 gekoppelt ist. Der SQUID 10 ist außerdem ebenfalls induktiv an einer Auswerteschaltung 13 des Mikroskops 9 gekoppelt. Es sei an dieser Stelle darauf hingewiesen, dass die Aufnahmespule 11 nicht maßstäblich dargestellt ist. Typischerweise ist man bestrebt, die Aufnahmespule 11 so klein wie möglich zu halten.

Mit dem SQUID-Mikroskop 9 erfolgt eine Lagebestimmung der magnetischen Partikel im Bohrkanal und insbesondere im Bereich der Düse 8. Aufgrund der hohen Empfindlichkeit eines SQUIDs 10 ist eine Lagebestimmung der Partikel mit einer lateralen Genauigkeit von 0,1 mm oder besser möglich. So kann bereits während des Bohrprozesses die Lage des fortschreitenden Bohrkanals überwacht werden und gegebenenfalls eingegriffen werden, wenn die Lage von einer vorbestimmten Bohrlinie abweicht.

Statt der (dreidimensionalen) Lage des Kanals 3 kann alternativ oder zusätzlich die zwischen dem Kanal 3 und der Oberfläche des Werkstückes 1 verbleibende Wanddicke bestimmt werden. Zum Bestimmen der Wanddicke kann bspw. ein Vergleich der Lage des Kanals mit der Position der Wand herangezogen werden. Es ist aber auch möglich, die Wanddicke aus den vom SQUID 10 detektierten Magnetfeldern direkt zu ermitteln, so dass lediglich eine eindimensionale Größe zu ermitteln it.

Im erfindungsgemäßen Überwachungsverfahren wird die Bestimmung der Lage des Bohrkanals oder der Wanddicke dazu verwendet, den Bohrprozess zu überwachen.

In einer ersten Alternative des Überwachungsverfahrens wird eine bestimmte maximal zulässige Abweichung von der idealen Bohrlinie oder eine nicht zu unterschreitende Mindestwanddicke vorgegeben. Bei Überschreiten der maximal zulässigen Abweichung von der idealen Bohrlinie bzw. bei Unterschreiten der Mindestwanddicke wird der Bohrvorgang abgebrochen.

In einer zweiten Variante des erfindungsgemäßen Überwachungsverfahrens steht das Werkstück 1 beim elektrochemischen Bohren unter mechanischer Spannung. Durch Variieren der mechanischen Spannung lässt sich der Verlauf des Bohrkanals 3 im Werkstück 1 beeinflussen. Wenn nun die maximal zulässige Abweichung der Lage des Kanals 3 von der idealen Bohrlinie so gering gewählt wird, dass die Abweichung noch nicht dazu führt, dass das Werkstück als Ausschuss zu betrachten ist, kann durch Verändern der mechanischen Spannung korrigierend auf den weiteren Verlauf des Bohrkanals 3 Einfluss genommen werden. Bei Erreichen der maximal zulässigen Abweichung oder bei Unterschreiten der Mindestwanddicke wird der Bohrprozess unterbrochen und die mechanische Spannung korrigiert. Nach der Korrektur der mechanischen Spannung kann der Bohrprozess dann fortgesetzt werden. Auf diese Weise lässt sich die Ausbeute beim elektrochemischen Bohren erhöhen.

Als dritte Alternative ist es auch möglich eine Regeleinheit vorzusehen, die die erfasste Wanddicke mit einer vorgegebenen, einzuhaltenden Sollwanddicke vergleicht und auf der Basis des Vergleiches eine Stellgröße zum Einstellen der mechanischen Spannung derart, dass die Sollwanddicke eingehalten wird, ausgibt. Anstatt die Stellgröße auf der Basis der erfassten Wanddicke und des Vergleichs der erfassten Wanddicke mit der Sollwanddicke zu ermitteln, ist es auch möglich, die Stellgröße auf der Basis der erfassten Lage des Kanals 3 und eines Vergleiches der erfassten Lage mit einer vorgegebenen Bohrlinie zu ermitteln.

Die beschriebenen Verfahren können insbesondere beim Bohren von Kühlluftkanälen in Turbinenbauteilen, insbesondere in Gasturbinenschaufeln, Verwendung finden. Nachfolgend wird daher eine Gasturbinenanlage beschrieben, in der Bauteile mit elektrochemisch gebohrten Kühlluftbohrungen Verwendung finden. Das Bohren der darin beschriebenen Kühlluftbohrungen beziehungsweise Filmkühllöcher kann insbesondere mit dem erfindungsgemäßen Verfahren überwacht werden.

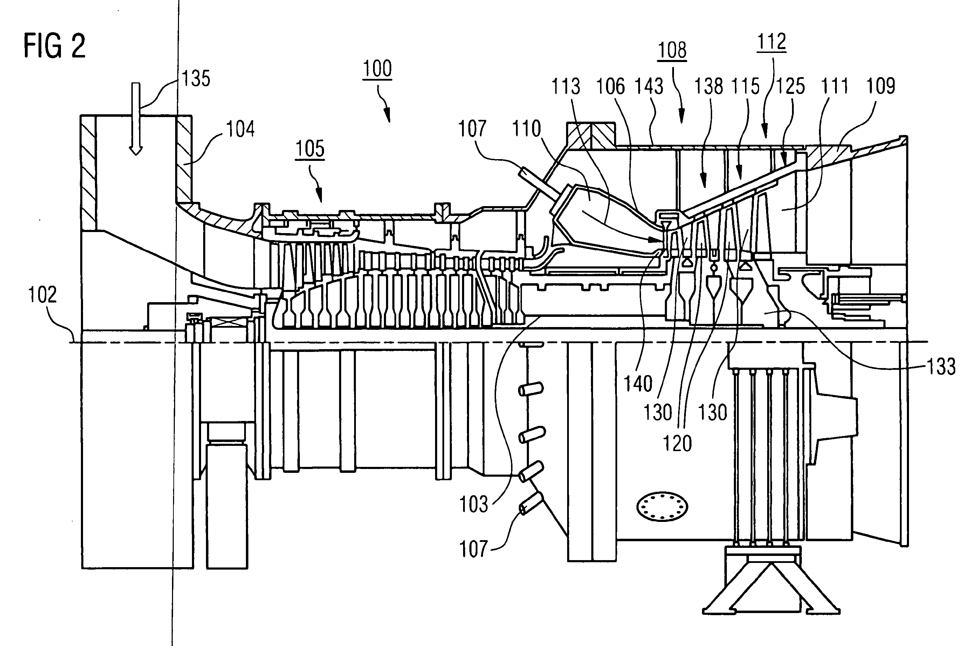

Die Figur 2 zeigt beispielhaft eine Gasturbine 100 in einem Längsteilschnitt. Die Gasturbine 100 weist im Inneren einen um eine Rotationsachse 102 drehgelagerten Rotor 103 auf, der auch als Turbinenläufer bezeichnet wird. Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.

Die Ringbrennkammer 106 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet. Solche Superlegierungen sind beispielsweise aus der EP 1 204 776 B1, EP 1 306 454, EP 1 319 729 A1, WO 99/67435 oder WO 00/44949 bekannt; diese Schriften sind Teil der Offenbarung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrAlX kann noch eine Wärmedämmschicht vorhanden sein, und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewadten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Figur 3 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf. Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt). Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet. Solche Superlegierungen sind beispielsweise aus der EP 1 204 776 B1, EP 1 306 454, EP 1 319 729 A1, WO 99/67435 oder WO 00/44949 bekannt; diese Schriften sind Teil der Offenbarung. Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind. Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt. Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures). Solche Verfahren sind aus der US-PS 6,024,792 und der EP 0 892 090 A1 bekannt.

Ebenso können die Schaufeln 120, 130 Beschichtungen gegen Korrosion oder Oxidation (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw.

Hafnium (Hf)). Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrAlX kann noch eine Wärmedämmschicht vorhanden sein und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions-und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

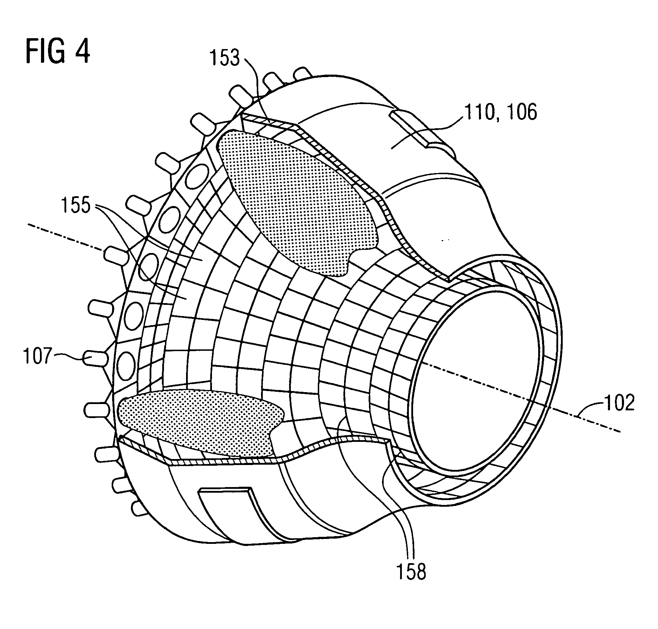

Die Figur 4 zeigt eine Brennkammer 110 einer Gasturbine. Die Brennkammer 110 ist beispielsweise als so genannte Ringbrennkammer ausgestaltet, bei der eine Vielzahl von in Umfangsrichtung um die Rotationsachse 102 herum angeordneten Brennern 107 in einen gemeinsamen Brennkammerraum münden. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 ist arbeitsmediumsseitig mit einer besonders hitzebeständigen Schutzschicht ausgestattet oder aus hochtemperaturbeständigem Material gefertigt. Dies können massive keramische Steine oder Legierungen mit MCrAlX und/oder keramischen Beschichtungen sein. Die Materialien der Brennkammerwand und deren Beschichtungen können ähnlich der Turbinenschaufeln sein.

Aufgrund der hohen Temperaturen im Inneren der Brennkammer 110 kann zudem für die Hitzeschildelemente 155 bzw. für deren Halteelemente ein Kühlsystem vorgesehen sein.

Die Brennkammer 110 ist insbesondere für eine Detektion von Verlusten der Hitzeschildelemente 155 ausgelegt. Dazu sind zwischen der Brennkammerwand 153 und den Hitzeschildelementen 155 eine Anzahl von Temperatursensoren 158 positioniert.

## Patentansprüche

1. Verfahren zum Ermitteln der Lage eines mittels eines Elektrolyten elektrochemisch gebohrten Kanals (3) in einem Werkstück (1) und/oder der zwischen dem elektrochemisch gebohrten Kanal (3) und der Oberfläche des Werkstücks vorhandenen Wanddicke, insbesondere in einem Turbinenbauteil,
**dadurch gekennzeichnet, dass**
- dem beim Bohren Verwendung findenden Elektrolyten (5) magnetische oder magnetisierbare Partikel zugesetzt werden,
- die mit den Partikeln verbundenen oder erzeugten Magnetfelder detektiert werden, und
- die Lage des elektrochemisch gebohrten Kanals (3) und/oder die zwischen dem elektrochemisch gebohrten Kanal (3) und der Oberfläche des Werkstücks (1) vorhandene Wanddicke anhand der detektierten Magnetfelder ermittelt wird.

2. Verfahren nach Anspruch 1,
**dadurch gekennzeichnet, dass**
zum Detektieren der Magnetfelder ein supraleitender Quanteninterferenzdetektor (10) zur Anwendung kommt.

3. Verfahren nach Anspruch 2,
**dadurch gekennzeichnet, dass**
das Ermitteln der Lage des elektrochemisch gebohrten Kanals (3) und/oder der zwischen dem elektrochemisch gebohrten Kanal (3) und der Oberfläche des Werkstücks (1) vorhandene Wanddicke mit Hilfe eines SQUID-Mikroskops (9) erfolgt, in dem der supraleitender Quanteninterferenzdetektor (10) zum Detektieren der Magnetfelder Verwendung finden.

4. Verfahren zum Überwachen eines elektrochemischen Bohrprozesses,
**dadurch gekennzeichnet, dass**
das Verfahren zum Ermitteln der Lage eines mittels eines Elektrolyten elektrochemisch gebohrten Kanals (3) und/oder der zwischen dem elektrochemisch gebohrten Kanal (3) und der Oberfläche des Werkstücks (1) vorhandenen Wanddicke in einem Werkstück (1) nach einem der vorangehenden Ansprüche zur Anwendung kommt.

5. Verfahren nach Anspruch 4,
**dadurch gekennzeichnet, dass**
beim Überwachen des elektrochemischen Bohrprozesses ein Vergleichen der ermittelten Lage des elektrochemisch gebohrten Kanals (3) mit einer vorgegebenen Bohrlinie erfolgt.

6. Verfahren nach Anspruch 4 oder 5,
**dadurch gekennzeichnet, dass**
beim Überwachen des elektrochemischen Bohrprozesses ein Vergleichen der zwischen dem Kanal (3) und der Oberfläche des Werkstückes (1) verbleibenden Wanddicke mit einer vorgegebenen Wanddicke erfolgt.

7. Verfahren nach Anspruch 5 oder 6,
**dadurch gekennzeichnet, dass**
ein Abbruch des elektrochemischen Bohrens erfolgt, wenn beim Vergleichen das Überschreiten einer vorgegeben zulässigen Abweichung der ermittelten Lage des elektrochemisch gebohrten Kanals (3) von der vorgegebenen Bohrlinie und/oder das Unterschreiten der vorgegebenen Wanddicke festgestellt wird.

8. Verfahren nach Anspruch 5 oder 6,
**dadurch gekennzeichnet, dass**
das Werkstück (1) beim Bohren unter mechanischer Spannung steht und eine Änderung der mechanischen Spannung erfolgt, wenn beim Vergleichen das Überschreiten einer vorgegeben zulässigen Abweichung der ermittelten Lage des elektrochemisch gebohrten Kanals (3) von der vorgegebenen Bohrlinie und/oder das Unterschreiten der vorgegebenen Wanddicke festgestellt wird.

9. Verfahren nach Anspruch 5 oder 6,
**dadurch gekennzeichnet, dass**
die Lage des elektrochemisch gebohrten Kanals (3) im Werkstück oder die zwischen dem elektrochemisch gebohrten Kanal (3) und der Oberfläche des Werkstücks (1) vorhandene Wanddicke kontinuierlich erfasst und einer Regeleinheit zugeführt wird, welche auf der Basis des Vergleiches der erfassten Lage des elektrochemisch gebohrten Kanals (3) im Werkstück (1) mit der vorgegebenen Bohrlinie bzw. des Vergleiches der erfassten Wanddicke mit der vorgegebenen Wanddicke eine Stellgröße zum Beeinflussen der mechanischen Spannung ausgibt.

## Claims

1. Method for determining the position of a channel (3) which has been electrochemically machined in a workpiece (1) by means of an electrolyte and/or the wall thickness which is present between the electrochemically machined channel (3) and the surface of the workpiece, in particular in a turbine component,
**characterized in that**
- magnetic or magnetizable particles are added to the electrolyte (5) used during the machining,
- the magnetic fields associated with or generated by the particles are detected, and
- the position of the electrochemically machined channel (3) and/or the wall thickness which is present between the electrochemically machined channel (3) and the surface of the workpiece (1) is determined on the basis of the detected magnetic fields.

2. Method according to claim 1,
**characterized in that**
a superconducting quantum interference detector (10) is used to detect the magnetic fields.

3. Method according to claim 2,
**characterized in that**
the position of the electrochemically machined channel (3) and/or the wall thickness which is present between the electrochemically machined channel (3) and the surface of the workpiece (1) is/are determined with the aid of a SQUID microscope (9), in which the superconducting quantum interference detector (10) is used to detect the magnetic fields.

4. Method for monitoring an electrochemical machining process,
**characterized in that**
the method for determining the position of a channel (3) which has been electrochemically machined by means of an electrolyte and/or the wall thickness which is present between the electrochemically machined channel (3) and the surface of the workpiece (1) in a workpiece (1) according to one of the preceding claims is used.

5. Method according to claim 4,
**characterized in that**
the determined position of the electrochemically machined channel (3) is compared with a predetermined machining line during the monitoring of the electrochemical machining process.

6. Method according to claim 4 or 5,
**characterized in that**
the wall thickness which remains between the channel (3) and the surface of the workpiece (1) is compared with a predetermined wall thickness during the monitoring of the electrochemical machining process.

7. Method according to claim 5 or 6,
**characterized in that**
the electrochemical machining is terminated if the comparison ascertains that a predetermined permissible deviation in the determined position of the electrochemically machined channel (3) from the predetermined machining line has been exceeded and/or the wall thickness has dropped below the predetermined wall thickness.

8. Method according to claim 5 or 6,
**characterized in that**
the workpiece (1) is under mechanical stress during the machining, and the mechanical stress is changed if the comparison ascertains that a predetermined permissible deviation in the determined position of the electrochemically machined channel (3) from the predetermined machining line has been exceeded and/or the wall thickness has dropped below the predetermined wall thickness.

9. Method according to claim 5 or 6,
**characterized in that**
the position of the electrochemically machined channel (3) in the workpiece or the wall thickness which is present between the electrochemically machined channel (3) and the surface of the workpiece (1) is continuously recorded and fed to a control unit which, on the basis of the comparison of the recorded position of the electrochemically machined channel (3) in the workpiece (1) with the predetermined machining line or of the comparison of the recorded wall thickness with the predetermined wall thickness, outputs a control variable for influencing the mechanical stress.

## Revendications

1. Procédé de détermination de la position d'un canal (3) percé électrochimiquement au moyen d'un électrolyte, dans une pièce (1) et/ou de l'épaisseur de paroi présente entre le canal (3) percé électrochimiquement et la surface de la pièce, notamment dans un élément de turbine,
**caractérisé en ce que**
- on ajoute à l'électrolyte (5) trouvant à s'utiliser lors du perçage des particules magnétiques ou pouvant être aimantées,
- on détecte les champs magnétiques reliés aux particules ou produit par les particules, et
- on détermine la position du canal (3) percé électrochimiquement et/ou l'épaisseur de paroi présente entre le canal (3) percé électrochimiquement et la surface de la pièce (1) au moyen des champs magnétiques détectés.

2. Procédé suivant la revendication 1,
**caractérisé en ce que**
pour détecter des champs magnétiques, on fait usage d'un détecteur (10) d'interférence quantique supraconducteur.

3. Procédé suivant la revendication 2,
**caractérisé en ce que**
on effectue la détermination de la position du canal (3) percé électrochimiquement et/ou de l'épaisseur de paroi présente entre le canal (3) percé électrochimiquement et la surface de la pièce (1) à l'aide d'un microscope (9) SQUID dans lequel on fait utilisation du détecteur (10) d'interférence quantique supraconducteur pour détecter les champs magnétiques.

4. Procédé de contrôle d'une opération de perçage électrochimique,
**caractérisé en ce que**
on fait utilisation du procédé de détermination de la position d'un canal (3) percé électrochimiquement au moyen d'un électrolyse et/ou de l'épaisseur de paroi d'une pièce (1) présente entre le canal (3) percé électrochimiquement et la surface de la pièce (1) suivant l'une des revendications précédentes.

5. Procédé suivant la revendication 4,
**caractérisé en ce que**
lors du contrôle de l'opération de perçage électrochimique, on effectue une comparaison entre la position déterminée du canal (3) percé électrochimiquement et une ligne de perçage prescrite.

6. Procédé suivant la revendication 4 ou 5,
**caractérisé en ce que**
lors du contrôle de l'opération de perçage électrochimique, on effectue une comparaison de l'épaisseur de paroi restant entre le canal (3) et la surface de la pièce (1) et une épaisseur de paroi prescrite.

7. Procédé suivant la revendication 5 ou 6,
**caractérisé en ce que**
l'on effectue un arrêt du perçage électrochimique lorsque, lors de la comparaison, on constate le dépassement d'un écart admissible prescrit entre la position déterminée du canal (3) percé électrochimiquement et la ligne de perçage prescrite et/ou lorsque l'on passe en dessous de l'épaisseur de paroi prescrite.

8. Procédé suivant la revendication 5 ou 6,
**caractérisé en ce que**
la pièce (1) est, lors du perçage, sous contrainte mécanique et on effectue une modification de la contrainte mécanique si, lors de la comparaison, on constate le dépassement d'un écart admissible prescrit entre la position déterminée du canal (3) percé électrochimiquement et la ligne de perçage prescrite et/ou lorsque l'on passe en dessous de l'épaisseur de paroi prescrite.

9. Procédé suivant la revendication 5 ou 6,
**caractérisé en ce que**
on détecte en continu la position du canal (3) percé électrochimiquement dans la pièce ou l'épaisseur de paroi présente entre le canal (3) percé électrochimiquement et la surface de la pièce (1) et on l'envoie à une unité de régulation, qui, sur la base de là comparaison entre la position détectée du canal (3) percé électrochimiquement dans la pièce (1) et la ligne de perçage prescrite, ou de la comparaison entre l'épaisseur de paroi détectée et l'épaisseur de paroi prescrite, émet une grandeur de réglage pour influer sur la contrainte mécanique.
